**Europäisches Patentamt**

**European Patent Office**

**Office européen des brevets**

(11) Veröffentlichungsnummer : **0 353 494 B1**

(12) **EUROPÄISCHE PATENTSCHRIFT**

(45) Veröffentlichungstag der Patentschrift :
**30.09.92 Patentblatt 92/40**

(21) Anmeldenummer : **89112635.1**

(22) Anmeldetag : **11.07.89**

(51) Int. Cl.⁵ : **B62D 25/16**

(54) **Kraftfahrzeugkotflügel mit Spritzwasserschutz.**

(30) Priorität : **30.07.88 DE 3826081**

(43) Veröffentlichungstag der Anmeldung :
**07.02.90 Patentblatt 90/06**

(45) Bekanntmachung des Hinweises auf die
Patenterteilung :
**30.09.92 Patentblatt 92/40**

(84) Benannte Vertragsstaaten :
**AT BE FR GB IT NL SE**

(56) Entgegenhaltungen :
**EP-A- 0 134 632**
**EP-A- 0 266 228**
**GB-A- 2 169 862**
**GB-A- 2 198 696**

(73) Patentinhaber : **AAV AERODYNAMISCHE
AUTOTEILE-VERTIEBS GMBH
Altes Feld 19
W-2000 Barsbüttel (DE)**

(72) Erfinder : **Weigl, Adolf
Tegelweg 129
W-2000 Hamburg 72 (DE)**

(74) Vertreter : **Schaefer, Konrad
Gehölzweg 20
W-2000 Hamburg 70 (DE)**

## Beschreibung

Die Erfindung betrifft einen Kotflügel der im Oberbegriff des Anspruchs 1 genannten Art.

Bewegen sich Kraftfahrzeuge auf regennasser Fahrbahn, so wird von den zumeist mit tiefem Profil versehenen Reifen Wasser, das bei Fahrbahnkontakt in die Profile eindringt, mitgerissen und nach feiner Zerstäubung als Sprühnebel vom Fahrtwind mitgerissen. Für nachfolgende und insbesondere überholende Fahrzeuge stellt dies eine erhebliche Sichtgefährdung dar, die eine häufige Unfallursache bildet. Insbesondere beim Betrieb von Lastkraftwagen auf Autobahnen liegt ein erhebliches Problem vor.

Als Spritzwasserschutz bei Kraftfahrzeugkotflügeln sind Gummilappen am hinteren Ende des Kotflügels bekannt sowie seitliche Abdeckungen des Kotflügels. In ihrer Wirkungsweise sind diese Spritzwasserschutzeinrichtungen aber äußerst begrenzt.

Das Hauptproblem besteht weniger in dem von den Reifen direkt nach hinten weggeschleuderten Wasser, als in dem Wasseranteil, der gegen die Innenseite des Kotflügels geschleudert und dort bei mehrfacher Reflexion zwischen Reifen und Kotflügel fein zersprüht und dann als feiner Nebel vom Fahrtwind weggerissen wird.

Es ist daher versucht worden, die Innenseite des Kotflügels mit aufpralldämpfenden Matten auszulegen, die die Wasserreflexion verhindern sollen. Auch derartige Maßnahmen sind in ihrer Wirkung äußerst begrenzt.

Ein Kotflügel der im Oberbegriff des Anspruchs 1 genannten Art ist aus der EP-A-0134632 bekannt. Hier ist der Kotflügel mit nach innen zum Rad hin weisenden Rippen versehen, zwischen denen Kanäle ausgebildet sind, die in Richtung des einstrahlenden Spritzwassers offen sind und dieses Spritzwasser auffangen und nach mehrfacher Reflexion im Kanal zum Niederschlag auf den Kanaloberflächen bringen. Im Kanal kann das Wasser dann seitlich herauslaufen und außerhalb des Rades abtropfen, so daß es nicht wieder vom Rad erneut aufgenommen und verspritzt wird.

Bei den erheblichen anfallenden Wassermassen, die bei starkem Regen dauernd gegen die Innenseite des Kotflügels gespritzt werden, ist dieser bekannte Spritzwasserschutz aber unzureichend, da er an seinen Oberflächen nur geringe Wassermengen binden und ableiten kann. Der größere Teil des Wassers wird nicht aufgenommen und tropft wieder auf das Rad zurück, von dem es erneut verspritzt wird.

Die Aufgabe der vorliegenden Erfindung besteht daher darin, einen Kraftfahrzeugkotflügel mit einem Spritzwasserschutz zu versehen, der das auftreffende Spritzwasser besser aufnimmt und möglichst restlos abführt.

Diese Aufgabe wird erfindungsgemäß mit den Merkmalen des Kennzeichnungsteiles des Anspruchs 1 gelöst.

Erfindungsgemäß sind an den Enden der Stege nach oben offene Rinnen ausgebildet. Das in die Kanäle zwischen die Stege gelangende Spritzwasser gelangt nach Reflexion fast restlos in die Rinnen und wird dort gesammelt. In den Rinnen kann es, wie in Regenrinnen, ablaufen, und zwar zur Seite, also zu einem Bereich außerhalb des Rades, wo das Wasser ungestört abtropfen kann, ohne erneut vom Rad erfaßt und verspritzt zu werden. Die dichte Sprühschleppe hinter fahrenden Kraftfahrzeugen, insbesondere LKW's kann auf diese Weise sehr viel besser verringert werden.

Vorteilhaft sind die Merkmale des Anspruches 2 vorgesehen. Die Fahrzeuginnenseite des Kotflügels ist zum Ablassen des Wassers besser geeignet als die Fahrzeugaußenseite, weil auf der Fahrzeuginnenseite unter dem stark zerklüfteten Wagenboden aus aerodynamischen Gründen stets ein Überdruck herrscht und ferner hier niedrige Luftströmungsgeschwindigkeiten vorliegen. Das Wasser kann hier aus den Rinnen weitgehend ungestört abtropfen.

Weiterhin vorteilhaft sind die Merkmale des Anspruches 3 vorgesehen. Auf der fahrzeugäußeren Seite des Kotflügels weist die schnell vorbeiströmende Luft (Fahrtwind) einen Unterdruck auf, der danach trachtet, das Wasser hier aus den Rinnen herauszusaugen. Dies würde zu einer unerwünschten Verwirbelung führen. Daher sind die Kanäle hier abzudecken, um diesen Effekt zu vermeiden.

Weiterhin vorteilhaft sind die Merkmale des Anspruches 4 vorgesehen. Die an den Enden der Stege vorgesehenen Rinnen schränken den offenen Einlaßquerschnitt zwischen den Stegen ein, was das Eintreten von Sprühwasser in die Kanäle behindert. Sind die Rinnen in ihren Querschnitten aber derart ausgebildet, daß sie von einer engsten Stelle zum Rad hin also entgegen dem Sprühstrom einen trichterartig sich erweiternden freien Querschnitt zwischen den Rinnen ausbilden, so wird in diesem Trichter das einströmende Spritzwasser in den Kanal hineingelenkt und kann in diesem nach Wandreflexionen in der Rinne zur Ruhe kommen und abfließen. Es wird auf diese Weise also erreicht, daß das auf den Spritzwasserschutz auftreffende Sprühwasser fast restlos in den Rinnen aufgefangen wird.

Dabei sind vorteilhaft die Merkmale des Anspruches 5 vorgesehen. Die Rinnen selbst verengen sich in ihrem Querschnitt oberhalb ihrer breitesten Stelle wieder. Dadurch wird erreicht, daß Sprühstrahlen, die nach Reflexion in dem Kanal mit zu hoher Geschwindigkeit in die Rinne treffen, aus dieser nicht wieder herausreflektieren können, sondern in der oben sich im Querschnitt verengenden Rinne fangen werden.

Weiterhin sind vorteilhaft die Merkmale des Anspruches 6 vorgesehen. Auf diese Weise wird das rasche Ablaufen des Wassers in den Rinnen begünstigt.

Weiterhin vorteilhaft sind die Merkmale des Anspruches 7 vorgesehen. Von dem Rad wird das Wasser stets im wesentlichen tangential, also im wesentlichen in Fahrtrichtung, weggeschleudert. Treffen diese Strahlen auf querstehende Teile der Rippen oder der Rinnen, so könnten sie im ungünstigen Winkel zurückgeworfen werden. Bei schrägstehenden Rinnen und Rippen erfolgt aber eine schräge Reflexion in die Kanäle und in die Rinnen hinein.

Schließlich sind vorteilhaft die Merkmale des Anspruches 8 vorgesehen. Elastisches Material wirkt aufpralldämpfend auf das auftreffende Spritzwasser, so daß dieses schneller in den Rinnen zur Ruhe kommt. Außerdem werden durch die elastische Nachgiebigkeit Beschädigungen durch aufgewirbelte Steine und dergleichen verringert. Es besteht ferner ein selbstreinigender Effekt bei Schlammablagerungen in den Kanälen.

In der Zeichnung ist die Erfindung beispielsweise und schematisch dargestellt. Es zeigen:

Figur 1: einen Schnitt nach Linie 1 - 1 in Figur 2 quer zur Radachse durch einen erfindungsgemäß ausgerüsteten Kotflügel,

Figur 2: einen Schnitt nach Linie 2 - 2 in Figur 1,

Figur 3: einen vergrößerten Schnitt durch einen Kanal mit zwei Rinnen und

Figur 4: eine Ansicht von innen gegen einen Kotflügel mit schräg angeordneten Kanälen.

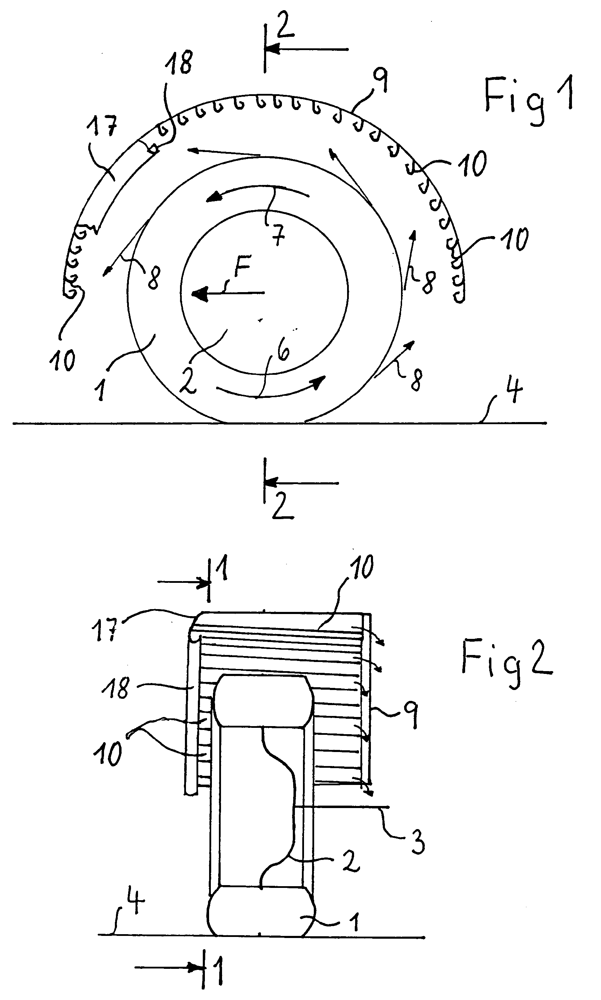

In den Figuren 1 und 2 ist ein Hinterachsrad eines LKW dargestellt mit Reifen 1, Felge 2 und Achse 3. Das Rad steht auf der Fahrbahn 4 und bewegt sich gemäß Figur 1 nach links in Fahrtrichtung (Pfeil F), hat also die mit den Pfeilen 6 und 7 angedeutete Drehrichtung.

Auf der regennassen Fahrbahn wird Wasser von der Reifenoberfläche aufgenommen, insbesondere in deren Profilierung, und vom Reifen in Richtung der Pfeile 8 im wesentlichen tangential fortgeschleudert. Dieses Wasser trifft auf den Kotflügel 9 üblicher Grundform und Anordnung und wird von dessen Innenseite zum Reifen hin rückreflektiert und nach mehrfacher Reflexion zwischen Reifen und Kotflügel als fein zerstäubter Nebel vom Fahrtwind mitgerissen.

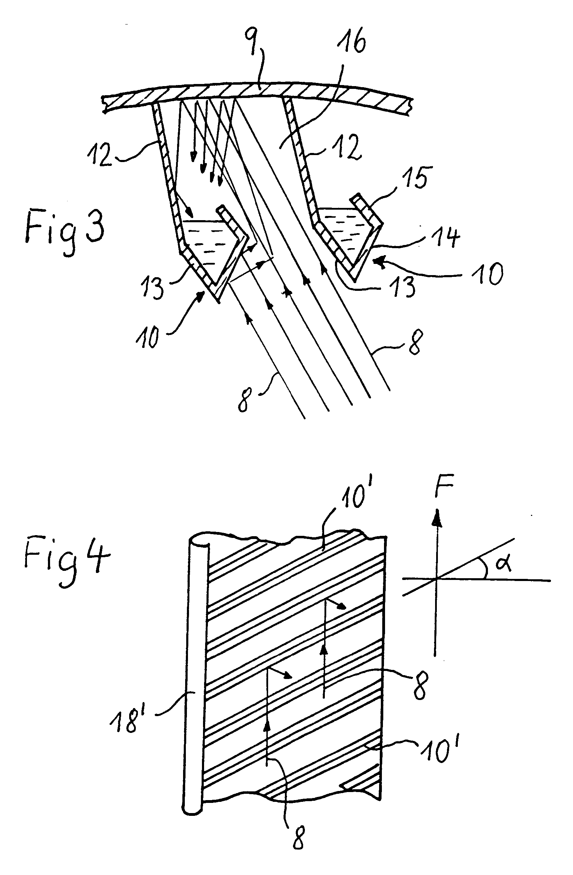

Um dies zu verhindern, sieht die Erfindung auf der Radinnenseite Rinnen 10 vor, die im vergrößerten Schnitt der Figur 3 in einer bevorzugten Ausführungsform dargestellt sind. Am Kotflügel 9 sind nach innen, also zum Rad hin weisende Stege 12 befestigt, an deren freien Enden die Rinnen 10 ausgebildet sind. Die Rinnen sind im dargestellten bevorzugten Ausführungsbeispiel jeweils aus den unteren Endstücken der Stege 12 und drei abgekanteten Flächenstücken 13, 14, 15 gebildet, wobei an der Ecke zwischen den Wandstücken 14 und 15 die Rinne 10 ihren breitesten Querschnitt hat, der Eintrittsspalt in den zwischen zwei Stegen 12 gebildeten Kanal 16 also seine engste Stelle aufweist. Unterhalb dieser engsten Stelle sind die begrenzenden Wandstücke 14 und 13 der benachbarten Rinnen nach unten, also in Richtung der eintreffenden Spritzwasserstrahlen 8, trichterförmig sich im Querschnitt erweiternd, also mit sich vergrößerndem Abstand, ausgebildet.

In der Figur 3 sind Spritzwasserstrahlen 8 dargestellt, die im wesentlichen parallel unter dem angegebenen Winkel auftreffen. Ein Teil dieser Strahlen tritt direkt in den Kanal 16 ein und wird am Kotflügel 9 sowie am Steg 12 reflektiert, um die Rinne 10 zu gelangen und sich dort niederzuschlagen und abzufließen. Ein Teil der Spritzwasserstrahlen 8 trifft gegen das Flächenstück 14 der Rinne 10 und wird von diesem, wie in der Zeichnung angedeutet, reflektiert. Diese schräg zur Richtung der auftreffenden Spritzwasserstrahlen 8 reflektierten Sekundärstrahlen werden aber, wie in der Figur angedeutet, von den unmittelbar in den Kanal 16 eintretenden Spritzwasserstrahlen mitgerissen und nehmen dann im wesentlichen denselben Verlauf wie die Spritzwasserstrahlen, die unmittelbar in den Kanal 16 eintreten. Im wesentlichen landen also alle auftreffenden Spritzwasserstrahlen schließlich in der Rinne 10, schlagen sich dort nieder und fließen ab.

Wie die Figuren 1 und 2 zeigen, sind über die Länge des Kotflügels eine größere Zahl solcher Rinnen 10 vorgesehen, die, wie die Figur 1 zeigt, im vorderen Teil des Kotflügels mit nach hinten liegenden Rinnen und etwa auf dem letzten Drittel des Kotflügels mit nach vorn liegenden Rinnen angeordnet sind, um jeweils die Spritzstrahlen 8 (siehe Figur 1) im günstigsten Winkel in den Kanal 16 (siehe Figur 3) eintreten zu lassen.

Die Kanäle 16 sind, wie Figur 2 zeigt, im wesentlichen quer zur Fahrtrichtung angeordnet. Zur Fahrzeuginnenseite des Kotflügels hin sind die Rinnen 10 offen, so daß dort, wie in Figur 2 die Pfeile anzeigen, das Wasser aus den Rinnen austreten und nach unten tropfen kann. Auf der Innenseite des Rades unter dem Wagenboden herrscht Überdruck und geringe Luftgeschwindigkeit. Die Wassertropfen können hier ohne starke Verwirbelung bis auf den Boden fallen.

Auf der Außenseite des Kotflügels, also in Figur 2 auf der linken Seite, herrscht durch den mit hoher Geschwindigkeit vorbeiziehenden Fahrtwind Unterdruck, der das Wasser hier aus den Rinnen 10 heraussaugen und wieder verwirbeln würde. Zu diesem Zweck sind hier die Rinnen 10 und die Kanäle 16 seitlich mit einem umgebogenen Rand 17 des Kotflügels abgedeckt, der an seiner unteren Kante zu einer Randrinne 18 umgebogen ist, die hier noch anlangendes Wasser auffängt und zu den Kotflügelenden ableitet.

Wie Figur 2 zeigt, sind in der dargestellten Ausführungsform die Rinnen 10 im wesentlichen quer zur Fahrtrichtung angeordnet. Sie sind allerdings, wie hier dargestellt, mit leichtem Gefälle angeordnet derart, daß sie zur Fahrzeuginnenseite des Kotflügels leicht abfallend verlaufen und das in den Rinnen gesammelte Wasser unter Gefälle nach innen zum Ablauf bringen.

Figur 4 zeigt eine bevorzugte Ausführungsform des Spritzschutzes in Ansicht von innen auf den Kotflügel 9' mit Rinnen 10' und Randrinne 18'. Die Ausbildung insbesondere der Rinnen 10' entspricht der der zuvor beschriebenen Ausführungsform. Jedoch sind die Rinnen 10' bzw. Kanäle hier unter einem Winkel α gegenüber der quer zur Fahrtrichtung (Pfeil F) liegenden Querrichtung angeordnet. Sie verlaufen also von der in der Figur 4 links gelegenen Außenseite des Kotflügels schräg nach vorn zur Innenseite des Kotflügels.

Es sind zwei Spritzstrahlen 8 eingezeichnet, die auf Rinnen 10' treffen. Aufgrund der Schräganordnung der Rinnen werden die Strahlen schräg reflektiert. Dadurch gelangen sie im günstigeren Winkel in die Kanäle zwischen den Rinnen bzw. in die Rinnen hinein und werden selbst dann, wenn sie bei ungünstigem Auftreffen zurückreflektiert werden, nicht zum Rad zurückreflektiert, sondern seitlich vom Rad weg zum Fahrzeuginneren hin in den luftberuhigten Bereich. Auf diese Weise läßt sich der Wirkungsgrad der Konstruktion noch erheblich verbessern. Für den Winkel α hat sich ein Winkel von etwa 30° in Versuchen bewährt.

Die Stege 12 und Rinnen 10 bzw. 10' bestehen vorzugsweise aus elastischem Material. Dies hat den Vorteil, daß auftreffende Spritzstrahlen weniger hart reflektiert, also leichter beruhigt werden. Ferner besteht der Vorteil einer geringeren Beschädigungsgefahr durch Steinschlag und der Vorteil eines Selbstreinigungseffektes bei Schlammverschmutzung. Auch der Kotflügel 9 kann aus elastischem Material bestehen, bzw. kann der Spritzwasserschutz als Einsatzteil mit einer Platte 9 vorgefertigt in einen Kotflügel eingesetzt und dort befestigt werden.

Die Querschnittsform der Rinnen 10, die in Figur 3 dargestellt ist, hat sich als hervorragend geeignet herausgestellt, um möglichst viel Wasser in den Rinnen 10 zu sammeln. Diese Form kann variiert werden, beispielsweise durch Verrundung der Ecken. Der Winkel, in dem die Stege 12 am Kotflügel 9 befestigt sind, kann ebenfalls variiert werden und sollte an unterschiedlichen Stellen des Kotflügels (s. Figur 1) stets so gewählt werden, daß die Stege und Rinnen in einem günstigen Winkel zu den auftreffenden Spritzstrahlen 8 stehen, etwa so, wie in Figur 3 dargestellt.

## Patentansprüche

1. Kraftfahrzeugkotflügel (9) mit Spritzwasserschutz, der mit zum Rad (1) hin weisenden, im wesentlichen quer zur Fahrtrichtung (F) erstreckten parallelen Stegen zum Rad hin offene Kanäle (16) ausbildet, in denen das niedergeschlagene Spritzwasser seitlich abläuft, dadurch gekennzeichnet, daß an den freien Enden der Stege (12) nach oben offene Rinnen (10, 10') ausgebildet sind, die derart geformt sind, daß das vom Rad (1) abspritzende Wasser (8) möglichst frei in den Kanal (16) zwischen benachbarten Rinnen (10, 10') eintreten kann und nach Reflexion innerhalb des Kanales in den Rinnen (10, 10') aufgefangen wird.

2. Kotflügel nach Anspruch 1, dadurch gekennzeichnet, daß die Kanäle (16) zur Fahrzeuginnenseite hin offen sind.

3. Kotflügel nach einem der vorhergehenden Ansprüche, dadurch gekennzeichnet, daß die Kanäle (16) zur Fahrzeugaußenseite hin abgedeckt sind.

4. Kotflügel nach einem der vorhergehenden Ansprüche, dadurch gekennzeichnet, daß die Rinnen (10, 10') im Querschnitt derart ausgebildet sind, daß der Abstand zwischen zwei Rinnen sich von einer engsten Stelle zum Rad hin vergrößert.

5. Kotflügel nach Anspruch 4, dadurch gekennzeichnet, daß die Rinnen (10, 10') in ihrem Querschnitt sich von ihrer breitesten Stelle nach oben zu ihrer Öffnung hin verengen.

6. Kotflügel nach einem der vorhergehenden Ansprüche, dadurch gekennzeichnet, daß die Rinnen (10, 10') von der Außenseite des Kotflügels (9, 9') nach innen mit Gefälle ablaufend angeordnet sind.

7. Kotflügel nach einem der vorhergehenden Ansprüche, dadurch gekennzeichnet, daß die Kanäle (16) unter einem Winkel (α) derart angeordnet sind, daß sie von der Außenseite des Kotflügels (9') schräg in Fahrtrichtung (F) nach vorn zur Kotflügelinnenseite verlaufen.

4

8. Kotflügel nach einem der vorhergehenden Ansprüche, dadurch gekennzeichnet, daß die Spritzwasserschutzanordnung (9, 9', 10, 10', 12) aus elastischem Material besteht.

**Claims**

1. Vehicle wing (9) with a spray shield which has parallel webs which extend substantially transverse to the direction of movement (F) and define channels (16) which are open towards the wheel and in which the deposited spray runs off laterally, characterised in that formed at the free end of the webs (12) there are upwardly open ducts (10, 10') which are so shaped that water (8) sprayed from the wheel (1) can enter as freely as possible into the channel (16) between adjacent ducts (10, 10') and after reflection within the channel is trapped in the ducts (10, 10').

2. Wing as claimed in claim 1, characterised in that the channels (16) are open towards the inner side of the vehicle.

3. Wing as claimed in one of the preceding claims, characterised in that the channels (16) are closed towards the outer side of the vehicle.

4. Wing as claimed in one of the preceding claims, characterised in that the ducts (10, 10') are so constructed in cross-section that the distance between two ducts increases from a narrowest point towards the wheel.

5. Wing as claimed in claim 4, characterised in that the cross-section of the ducts (10, 10') narrows upwardly from its broadest point to its opening.

6. Wing as claimed in one of the preceding claims, characterised in that the ducts (10, 10') are arranged to descend inwardly with a gradient from the outer side of the wing (9, 9').

7. Wing as claimed in one of the preceding claims, characterised in that the channels (16) are disposed at an angle ($\alpha$) such that they extend from the outer side of the wing (9') obliquely forwardly in the direction of movement (F) to the inner side of the wing.

8. Wing as claimed in one of the preceding claims, characterised in that the spray shield arrangement (9, 9', 10, 10', 12) comprises elastic material.

**Revendications**

1. Garde-boue (9) pour véhicule, comportant un dispositif anti-projections d'eau qui forme des canaux ouverts (16) en direction de la roue (1) , constitués par des nervures parallèles qui s'étendent sensiblement transversalement à la direction de déplacement (F) et vers la roue, et dans lesquels l'eau projetée et qui s'y est déposée s'écoule latéralement, caractérisé en ce qu'aux extrémités libres des nervures (12) sont réalisées des rigoles (10, 10') ouvertes vers le haut, qui ont une forme telle que l'eau (8) projetée par la roue (1) peut pénétrer le plus librement possible entre des rigoles (10, 10') voisines dans le canal (16) et, après réflexion à l'intérieur du canal être recueillie dans les rigoles (10, 10').

2. Garde-boue selon la revendication 1, caractérisé on ce que les canaux (16) sont ouverts en direction du côté intérieur du véhicule.

3. Garde-boue selon l'une des revendications précédentes, caractérisé en ce que les canaux (16) sont recouverts en direction du côté extérieur du véhicule.

4. Garde-boue selon l'une des revendications précédentes, caractérisé en ce que les rigoles (10, 10') ont en section transversale une forme telle que la distance entre deux rigoles augmente d'un endroit le plus étroit vers la roue.

5. Garde-boue selon la revendication 4, caractérisé en ce que la section transversale des rigoles (10, 10') se rétrécit de leur endroit le plus large vers le haut jusqu'à leur ouverture.

6. Garde-boue selon l'une des revendications précédentes, caractérisé en ce que les rigoles (10, 10') sont agencées en présentant, depuis le côté extérieur du garde-boue (9, 9'), une pente descendante vers l'intérieur.

7. Garde-boue selon l'une des revendications précédentes, caractérisé en ce que les canaux (16) présentent un angle (α) tel que, depuis le côté extérieur du garde-boue (9'), ils sont inclinés, dans la direction de déplacement (F), vers l'avant par rapport au côté intérieur du garde-boue.

8. Garde-boue selon l'une des revendications précédentes, caractérisé en ce que le dispositif (9, 9', 10, 10', 12) anti-projections d'eau consiste en un matériau élastique.

EP 0 353 494 B1

Fig 1

Fig 2

Fig 3

9    16

12    12

15

13    14

13    10

10

8

8

8

Fig 4

10'

F

α

8

18'

10'

8